# EUROPÄISCHE PATENTSCHRIFT

(11) **EP 3 504 507 B1**
(45) Veröffentlichungstag und Bekanntmachung des Hinweises auf die Patenterteilung: **08.09.2021**
(21) Anmeldenummer: 17749612.2
(22) Anmeldetag: 12.07.2017
(51) Int. Cl.: G01B 11/02, G01B 11/24, G01B 11/06

(54) **VERFAHREN UND VORRICHTUNG ZUR OPTISCHEN OBERFLÄCHENMESSUNG MIT HILFE EINES CHROMATISCH KONFOKALEN SENSORS**
METHOD AND DEVICE FOR OPTICAL SURFACE MEASUREMENT BY MEANS OF A CHROMATICALLY CONFOCAL SENSOR
PROCÉDÉ ET DISPOSITIF DE MESURE OPTIQUE DE SURFACE À L'AIDE D'UN CAPTEUR CONFOCAL CHROMATIQUE

(30) Priorität: 25.08.2016 DE 102016115827
(43) Veröffentlichungstag der Anmeldung: 03.07.2019
(73) Patentinhaber: Nanofocus AG, 46049 Oberhausen (DE)
(72) Erfinder: FRANK, Johannes, 51065 Köln (DE)
(74) Vertreter: Schneiders & Behrendt Bochum
(86) Internationale Anmeldenummer: PCT/EP2017/067565
(87) Internationale Veröffentlichungsnummer: WO 2018/036715

(56) Entgegenhaltungen:
- DE-A1-102008 029 459
- DE-A1-102012 111 008
- DE-A1-102013 016 368
- GB-A- 2 497 792
- US-A- 3 452 278

## Beschreibung

Die Erfindung betrifft ein Verfahren zur optischen Vermessung von technischen Oberflächen mit Hilfe eines chromatisch konfokalen Sensors, wobei Licht wenigstens einer Lichtquelle über ein optisches System mit definierter chromatischer Aberration auf die zu vermessende Oberfläche einer Probe gerichtet wird.

Außerdem betrifft die Erfindung einen chromatisch konfokalen Sensor zur Durchführung des Verfahrens, mit mindestens einer Lichtquelle, deren Licht über ein optisches System mit definierter chromatischer Aberration auf die zu vermessende Oberfläche einer Probe gerichtet wird.

Bei der konfokalen Messtechnik wird Licht einer Lichtquelle in der Regel über ein Konfokalfilter, einen Strahlteiler und eine Optik auf die zu vermessende Oberfläche fokussiert. Dabei wurde früher entweder der Messtisch, auf dem die Probe liegt, oder aber die Optik in Z-Richtung auf und ab bewegt und genau der Augenblick ausgewertet, in dem der Fokus auf die zu vermessende Oberfläche trifft. Dieses Licht wird über ein Konfokal-Filter (z.B. eine Lochblende) auf einen entsprechenden Sensor geleitet. Der Sensor zeigt ein maximales Signal, wenn sich die Oberfläche genau im Fokus befindet. Dadurch kann die genaue Z-Höhe der Oberfläche bestimmt werden.

Durch die Trägheit der zu bewegenden Massen ist diese Art des Verfahrens nicht geeignet, höhere Messraten zu liefern.

Daher sind im weiteren Verlauf der Entwicklung die Scan-Methoden zwar weiter entwickelt worden, die Tatsache, dass immer noch mechanische Komponenten eine Rolle spielen, setzen auch diesen Verfahren Grenzen.

Eine Methode, bei der auf derartige mechanische Elemente verzichtet werden kann, ist der Einsatz eines chromatisch konfokalen Sensors. Das breitbandige Spektrum einer Lichtquelle (beispielsweise weißes Licht) wird über ein optisches System mit definierter Dispersion auf die Probenoberfläche geleitet. Aufgrund der Dispersion entsteht eine chromatische Längsaberration, wodurch jeder "Lichtfarbe" eine definierte Z-Position auf der Probenoberfläche zugeordnet und somit die Topographie der Probe ermittelt werden kann. Ein mechanisches Scannen in Z-Richtung ist also nicht mehr erforderlich.

Die Ermittlung der korrekten Z-Position der Probenoberfläche, d.h. der Topographie erfolgt bei chromatisch konfokalen Sensoren klassisch über ein Spektrometer. Das von der Probe reflektierte Licht wird spektral analysiert, wobei die dominante Wellenlänge der Z-Position der Probe entspricht. Die verwendeten Spektrometerzeilen können mit Datenraten von mehreren kHz ausgelesen werden. Dadurch lassen sich schnelle chromatisch konfokale Sensoren realisieren. Die Auslesegeschwindigkeit der Spektrometerzeilen hat im Bereich mehrerer kHz aber ihre Grenzen und kann nicht ohne Weiteres weiter erhöht werden. Aus den Patentanmeldungen DE 10 2012 111008 A1, GB 2 497 792 A und DE 10 2013 016368 A1 sind darüber hinaus chromatisch konfokale Sensoren bekannt, welche eine durchstimmbare Lichtquelle verwenden.

Der Erfindung liegt daher die Aufgabe zugrunde, ein Verfahren der eingangs genannten Art so weiter zu entwickeln, dass sehr hohe Messraten möglich werden.

Die Erfindung löst diese Aufgabe mittels eines Verfahrens mit durchstimmbarer Lichtquelle gemäß Anspruch 1.

Durch die Veränderung der Wellenlänge einer als Lichtquelle eingesetzten "Swept Source" im Zusammenhang mit dem optischen System mit definierter chromatischer Aberration findet zwischen dem optischen System und der Probenoberfläche ein rein optisches "Scannen" in Z-Richtung statt. Das auf die Probenoberfläche fallende Licht wird über den Z-Bereich durchfokussiert und zurückreflektiert und fällt im einfachsten Fall auf eine schnelle Fotodiode als Fotosensor, mit der das Signalmaximum ermittelt wird, wobei die durchstimmbare Lichtquelle hinsichtlich der Zeitabhängigkeit der Wellenlänge mit einem verwendeten Detektionssystem synchronisiert ist, derart, dass aus dem zeitlichen Verlauf der Signalkurve die Wellenlänge des reflektierten Lichts im Signalmaximum bestimmt wird und damit auf die Höhe Z der Probe geschlossen werden kann.

Der Fotosensor kann als Punktsensor ausgebildet sein. Es ist jedoch erfindungsgemäß auch vorgesehen, dass das Licht der Lichtquelle in eine Vielzahl von Teilstrahlen aufgespalten und als Detektor ein vielkanaliger Sensor, z.B. ein (zeilen- oder matrixförmiges) Array von Fotodioden, verwendet wird.

Ebenso kann eine Vielzahl von Lichtquellen verwendet werden, wobei die zurückreflektierten Einzelstrahlen der Lichtquellen mittels eines entsprechenden vielkanaligen Fotosensors parallel detektiert werden.

Durch diese Art der Parallelisierung kann die Erfassung der Probentopographie weiter beschleunigt werden, in dem die Einzelstrahlen mehrere voneinander beabstandete Punkte auf der Probenoberfläche gleichzeitig abtasten.

Entsprechend des erfindungsgemäßen Verfahrens weist das zur Analyse des zeitlich veränderlichen Signal des Fotosensors verwendete Detektionssystem einen Extremwertwertspeicher auf, der dem zeitlich veränderlichen Signal jeweils bis zum Erreichen eines Extremums des Signals folgt, wobei bei Erreichen des Extremums jeweils ein Spitzenindikatorsignal generiert wird, anhand dessen der Zeitpunkt des Extremums und anhand dessen wiederum die dem Signalmaximum zugeordnete Wellenlänge der Lichtquelle festgestellt wird. Weist der zeitliche Verlauf des Signals mehrere (lokale) Extrema auf, so ist das (absolute) Signalmaximum dem während eines Durchstimmzyklus der Lichtquelle zuletzt erzeugten Spitzenindikatorsignal zuzuordnen. Auch die Detektion mehrerer (lokaler) Signalmaxima ist mit diesem Verfahren möglich, z.B. um die Schichtdickenverteilung einer Beschichtung an der Probenoberfläche mit der erfindungsgemäßen Methode zu ermitteln.

Die obige Aufgabe löst die Erfindung mittels eines chromatisch konfokalen Sensors gemäß Anspruch 4.

Das Licht der Lichtquelle wird beispielsweise über einen halbdurchlässigen Spiegel oder einen Strahlteilerwürfel als Strahlteiler auf das optische System mit definierter chromatischer Aberration gerichtet. Das zurückreflektierte Licht durch das optische System gelangt durch den halbdurchlässigen Spiegel auf den Fotosensor, wobei durch einen dem Sensor vorgeschalteten Konfokalfilter (Lochblende/"Pinhole") nur das zur Messung wesentliche Licht durchgelassen wird. Mit einer solchen Anordnung wird das Licht auf dem Sensor dann maximal, wenn die Lichtquelle die Wellenlänge emittiert, die aufgrund der Längsaberration der Optik auf die Oberfläche der Probe fokussiert wird. Bei Einsatz einer zyklisch spektral durchgestimmten Lichtquelle zeigt das Sensorsignal eine typische Signalspitze (Konfokalpeak). Aus dem Zeitpunkt des Auftretens dieses Signalmaximums kann bei bekannter Wellenlänge und spektraler Charakteristik der Optik die Höhe der Probe an der jeweiligen Messposition bestimmt werden.

Eine andere Möglichkeit besteht darin, die Vorrichtung faseroptisch integriert auszuführen. Dabei sind die Lichtquelle, der Fotosensor und das optische System über optische Fasern aneinander angebunden.

Als besonders vorteilhaft für die Erfindung wird als Lichtquelle ein Laser eingesetzt. Derartige, bezüglich der Wellenlänge durchstimmbare Swept Laser Sources (beispielsweise der FDML-1310 der Firma OptoRes), bieten Sweep-Raten von bis zu 1,5 MHz bei Bandbreiten von > 100 nm. Grundsätzlich geeignet für das Verfahren ist aber auch jede andere bezüglich der Wellenlänge durchstimmbare Lichtquelle.

Diese swept sources werden insbesondere im medizinischen Bereich in der Optical Coherence Tomographie (OCT) bereits eingesetzt, wie beispielsweise aus dem Artikel "Handheld ultrahigh speed swept source optical coherence tomography instrument using a MEMS scanning mirror" Chen D. Lu, Martin F. Kraus, Benjamin Potsaid, Jonathan J. Liu, WooJhon Choi, Vijaysekhar Jayaraman, Alex E. Cable, Joachim Hornegger, Jay S. Duker und James G. Fujimoto, BIOMEDICAL OPTICS EXPRESS 293, 20.12.2013 hervorgeht.

Beim Einsatz eines oben beschriebenen Swept Lasers in Zusammenhang mit dem chromatisch konfokalen Sensor sind extrem hohe Messraten möglich. Es werden mehr als 1.000 000 (3D) Messpunkte pro Sekunde und pro Messkanal erreicht. Während der Vermessung der Topographie wird die zu untersuchende Probe in X-/Y-Richtung, d.h. quer zur Richtung des auf die Probenoberfläche gerichteten Lichtstrahls, relativ zum optischen System bewegt, so dass dabei die Oberfläche rasterförmig abgetastet wird. Für die Bewegung kann eine X-/Y-Verstellvorrichtung an sich bekannter Art verwendet werden.

Damit diese extrem hohe Messdatenrate und die damit verbundenen Signale entsprechend schnell ausgewertet werden können, wird vorzugsweise ein Detektionssystem der oben beschriebenen Art verwendet, das das Sensorsignal elektronisch analysiert, wobei das Detektionssystem einen Extremwertwertspeicher aufweist, der dem zeitlich veränderlichen Signal jeweils bis zum Erreichen eines Extremums des Signals folgt, wobei bei Erreichen des Extremums jeweils ein Spitzenindikatorsignal generiert wird, anhand dessen der Zeitpunkt des Extremums und anhand dessen wiederum die dem Signalmaximum zugeordnete Wellenlänge der Lichtquelle festgestellt wird. Die Funktionsweise des Detektionssystems bei der Bestimmung des Signalmaximums ist in der Patentanmeldung DE 10 2016 100 261.6 beschrieben, auf die vollumfänglich Bezug genommen wird.

Damit können gleichzeitig mehrere Signalauswertungen parallel durchgeführt werden und die jeweiligen zeitlichen Signale mehrkanalig detektiert und die detektierten Maxima mehrkanalig ausgewertet werden.

Die erreichbare hohe Messrate erschließt der konfokal chromatischen Messtechnik neue Einsatzgebiete. So wird die Oberflächeninspektion bei Fertigungsprozessen ermöglicht, bei denen die Probe mit hoher Vorschubgeschwindigkeit bewegt wird (Walzen von Blechen, Ziehen von Folien).

Wie beim konventionellen Einsatz der Messtechnik kann auch mit der erfindungsgemäßen schnellen Ausführung die Dicke von dünnen, transparenten Proben oder transparenten Beschichtungen kontrolliert werden, sofern Folien-/Schichtober- und -Unterseite im Messbereich des Sensors liegen. In diesem Fall wird das an der Probe reflektierte Licht bei zwei verschiedenen Wellenlängen maximal. Aus dem spektralen Abstand der Lichtmaxima kann auf die Schichtdicke geschlossen werden.

Die Aufzählung der Einsatzgebiete ist naturgemäß nicht vollständig.

Ausführungsbeispiele der Erfindung werden im Folgenden anhand einer Zeichnungen näher erläutert. Es zeigen:
- Figur 1: eine schematische Darstellung einer erfindungsgemäßen Sensoranordnung in Freistrahlausführung;
- Figur 2: eine schematische Darstellung einer erfindungsgemäßen Sensoranordnung in faserbasierter Ausführung.

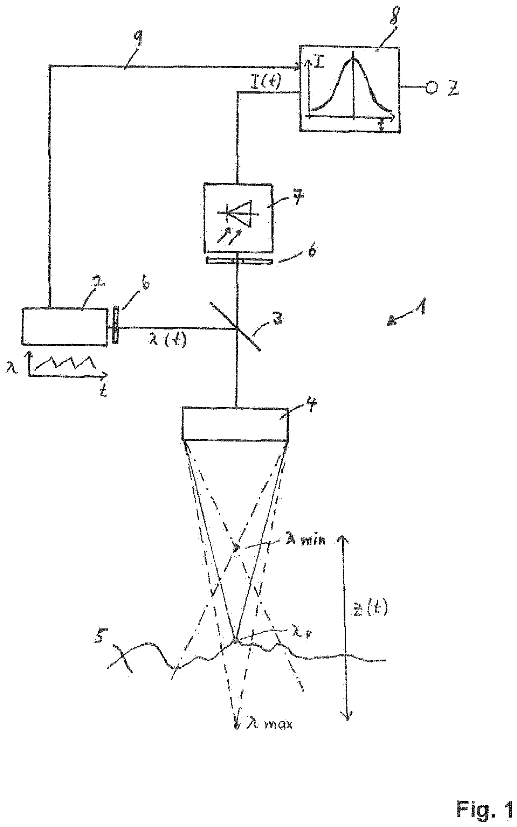

In Fig. 1 ist ein chromatisch konfokaler Sensor dargestellt und allgemein mit dem Bezugszeichen 1 versehen. Die wesentlichen Bestandteile dieses chromatisch konfokalen Sensors 1 sind zum einen eine durchstimmbare Lichtquelle, vorzugsweise ein geeigneter Laser (Swept Laser Source), der mit dem Bezugszeichen 2 versehen ist. Der durchstimmbare Laser 2 sendet sein Licht mit veränderlichen Wellenlängen durch einen Konfokalfilter (Pinhole) 6 über einen Strahlteiler 3, der im vorliegenden Beispiel ein halbdurchlässiger Spiegel ist, auf ein optisches System 4, welches aus einem Objektiv mit definierter chromatischer Längsaberration besteht. Das Licht wird wellenlängenabhängig in Z-Richtung in verschiedenen Höhen fokussiert und auf eine lediglich angedeutete Probe 5 gerichtet. Die Wellenlänge der Lichtquelle wird vorzugsweise zyklisch verändert, so dass in schneller Abfolge der Fokus in Z-Richtung gescannt werden kann.

Beim Durchstimmen des Lasers wird Licht einer bestimmten Wellenlänge auf der Oberfläche der Probe fokussiert. Das Licht wird von der Oberfläche zurückreflektiert durch das optische System 4, den halbdurchlässigen Spiegel 3 durch einen weiteren Konfokalfilter (Pinhole) 6 auf einen Fotosensor 7, der eine einzelne Fotodiode sein kann, geleitet, dessen gemessenes Signal (I(t)) über die Zeit die Intensitätsverteilung wie bei 8 dargestellt ergibt.

Der Laser 2 ist mit dem das Sensorsignal des Fotosensors 7 analysierenden Detektionssystem 8, wie mit dem Bezugszeichen 9 angedeutet, synchronisiert, damit einem detektierten Signalmaximum jeweils die entsprechende momentane Wellenlänge des Lasers 2 zugeordnet werden kann. Durch die Synchronisation zwischen Laser 2 und Detektionssystem 8 wird genau diejenige Wellenlänge (λ_{F}) ermittelt, die zum Signalmaximum der Intensitätskurve gehört. Daraus ergibt sich die Höhe der Probenoberfläche, wenn die Lage des Fokus vor der chromatischen Optik als Funktion der Wellenlänge bekannt ist. Zur Steigerung der Genauigkeit und zur Verbesserung der Linearität kann die Übertragungsfunktion zwischen Wellenlänge und Fokusabstand zusätzlich kalibriert werden.

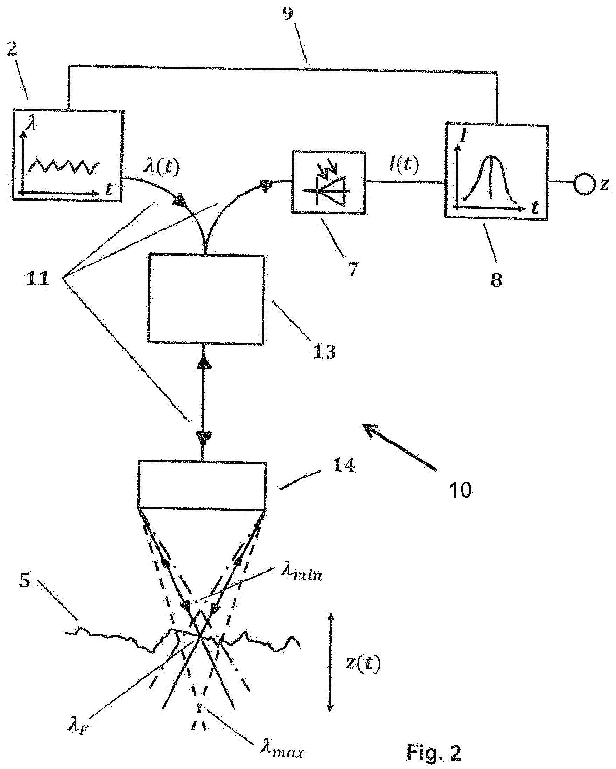

Fig. 2 zeigt eine faserbasierte Variante 10 der erfindungsmäßen Sensoranordnung. Einander entsprechende Komponenten sind mit denselben Bezugsziffern bezeichnet wir in Fig. 1. Die durchstimmbare Lichtquelle 2 ist an ihrem Ausgang über eine optische Faser 11 mit einem Faserkoppler 13 verbunden. Dieser ist seinerseits über einen weiteren Faserabschnitt 11 an einen Messkopf 14 umfassend eine Optik mit definierter chromatischer Aberration gekoppelt. Der Faserkoppler 13 koppelt über einen weiteren Faserabschnitt 11 den Fotosensor 7 an, der so das an der Probe 5 reflektierte Licht empfängt.

## Patentansprüche

1. Verfahren zur optischen Vermessung von technischen Oberflächen mit Hilfe eines chromatisch konfokalen Sensors, wobei Licht wenigstens einer Lichtquelle (2) über ein optisches System (4, 14) mit definierter chromatischer Aberration auf die zu vermessende Oberfläche einer Probe (5) gerichtet wird, wobei die Lichtquelle (2) bezüglich der auszusendenden Wellenlängen durchgestimmt wird und das von der Probenoberfläche (5) zurückreflektierte Licht auf mindestens einen Fotosensor (7) gelenkt wird, wobei das Sensorsignal über die Zeit gemessen und Zeitpunkt und Intensität eines Signalmaximums bestimmt und ausgewertet werden, wobei aus der Wellenlänge der Lichtquelle (2) zum Zeitpunkt des Signalmaximums die Höhe Z der Oberfläche abgeleitet wird, wobei das zeitlich veränderliche Signal des Fotosensors (7) zur Bestimmung des Signalmaximums mittels eines Detektionssystems (8) elektronisch analysiert wird, **dadurch gekennzeichnet, dass** das Detektionssystem (8) einen Extremwertwertspeicher aufweist, der dem zeitlich veränderlichen Signal nach Überschreiten eines Schwellwerts jeweils bis zum Erreichen eines Extremums des Signals folgt, wobei bei Erreichen des Extremums jeweils ein Spitzenindikatorsignal generiert wird, anhand dessen der Zeitpunkt des Extremums und anhand dessen wiederum die dem Signalmaximum zugeordnete Wellenlänge der Lichtquelle (2) festgestellt wird, wobei zur Erfassung von mehr als einem Extremwert im zeitlich veränderlichen Signal nach dem Erzeugen des jeweiligen Spitzenindikatorsignals und nach Unterschreiten des Schwellwerts die Nachverfolgung des Signals deaktiviert wird und, nachdem im weiteren Verlauf das Signal den Schwellwert erneut übersteigt, eine weitere Nachverfolgung des zeitlich veränderliche Signals aktiviert wird, bis das nächste zu detektierende Extremum erreicht und ein weiteres Spitzenindikatorsignal generiert wird.

2. Verfahren nach Anspruch 1, **dadurch gekennzeichnet, dass** das Licht der Lichtquelle (2) in eine Vielzahl von Teilstrahlen aufgespalten wird, wobei die zurückreflektierten Teilstrahlen mittels eines vielkanaligen Fotosensors parallel detektiert werden.

3. Verfahren nach Anspruch 1, **dadurch gekennzeichnet, dass** eine Vielzahl von Lichtquellen (2) verwendet wird, wobei die zurückreflektierten Einzelstrahlen der Lichtquellen mittels eines vielkanaligen Fotosensors (7) parallel detektiert werden.

4. Chromatisch konfokaler Sensor zur Durchführung des Verfahrens nach einem der Ansprüche 1 bis 3, mit mindestens einer Lichtquelle (2), deren Licht über ein optisches System (4, 14) mit definierter chromatischer Aberration auf die zu vermessende Oberfläche einer Probe (5) gerichtet wird, wobei die Lichtquelle (2) bezüglich der auszusendenden Wellenlänge durchstimmbar ist und das von der Probenoberfläche (5) zurückreflektierte Licht auf mindestens einen Fotosensor (7) gelenkt wird, wobei ein Detektionssystem (8) dazu eingerichtet ist, das Sensorsignal über die Zeit zu messen und den Zeitpunkt eines Signalmaximums zu bestimmen, wobei das Detektionssystem (8) eingerichtet ist, aus der Wellenlänge der Lichtquelle (2) zum Zeitpunkt des Signalmaximums die Höhe Z der Oberfläche (5) abzuleiten,
**dadurch gekennzeichnet, dass** das Detektionssystem (8) einen Extremwertwertspeicher aufweist, der dem zeitlich veränderlichen Signal nach Überschreiten eines Schwellwerts jeweils bis zum Erreichen eines Extremums des Signals folgt, und eingerichtet ist, bei Erreichen des Extremums jeweils ein Spitzenindikatorsignal zu generieren und anhand dessen den Zeitpunkt des Extremums und anhand dessen wiederum die dem Signalmaximum zugeordnete Wellenlänge der Lichtquelle (2) festzustellen, wobei der Extremwertspeicher weiterhin dazu eingerichtet ist, zur Erfassung von mehr als einem Extremwert im zeitlich veränderlichen Signal nach dem Erzeugen des jeweiligen Spitzenindikatorsignals und nach Unterschreiten des Schwellwerts die Nachverfolgung des Signals zu deaktivieren und, nachdem im weiteren Verlauf das Signal den Schwellwert erneut übersteigt, eine weitere Nachverfolgung des zeitlich veränderliche Signals zu aktivieren, bis das nächste zu detektierende Extremum erreicht wird, und ein weiteres Spitzenindikatorsignal zu generieren.

5. Chromatisch konfokaler Sensor nach Anspruch 4, **dadurch gekennzeichnet, dass** der Fotosensor (7) eine Fotodiode ist.

6. Chromatisch konfokaler Sensor nach Anspruch 4 oder 5, **dadurch gekennzeichnet, dass** das Licht der Lichtquelle (2) mittels eines Strahlteilers in eine Vielzahl von Teilstrahlen aufgespalten wird, wobei die zurückreflektierten Teilstrahlen mittels eines vielkanaligen Fotosensors (7) parallel detektiert werden.

7. Chromatisch konfokaler Sensor nach Anspruch 4 oder 5, **dadurch gekennzeichnet, dass** eine Vielzahl von Lichtquellen (2) vorgesehen ist, wobei die zurückreflektierten Einzelstrahlen der Lichtquellen (2) mittels eines vielkanaligen Fotosensors (7) parallel detektiert werden.

8. Chromatisch konfokaler Sensor nach einem der Ansprüche 4 bis 7, **dadurch gekennzeichnet, dass** das Licht der Lichtquelle (2) über einen Strahlteiler (3) auf das optische System (4, 14) mit definierter chromatischer Aberration gerichtet wird.

9. Chromatisch konfokaler Sensor nach Anspruch 8, **dadurch gekennzeichnet, dass** der Strahlteiler (3) ein halbdurchlässiger Spiegel ist.

10. Chromatisch konfokaler Sensor nach Anspruch 8, **dadurch gekennzeichnet, dass** der Strahlteiler (3) ein Strahlteilerwürfel ist.

11. Chromatisch konfokaler Sensor nach einem der Ansprüche 4 bis 10, **dadurch gekennzeichnet, dass** dem Fotosensor (7) ein Konfokalfilter (6) vorgeschaltet und/oder der Lichtquelle (2) ein Konfokalfilter (6) nachgeschaltet ist.

12. Chromatisch konfokaler Sensor nach einem der Ansprüche 4 bis 11, **dadurch gekennzeichnet, dass** die Lichtquelle (2), der Fotosensor (7) und das optische System (14) per Faserkoppler (13) über optische Fasern (11) aneinander angebunden sind.

13. Chromatisch konfokaler Sensor nach einem der Ansprüche 4 bis 12, **dadurch gekennzeichnet, dass** die Lichtquelle (2) ein Laser ist.

## Claims

1. Method for the optical measurement of technical surfaces with the aid of a chromatic confocal sensor, wherein light from at least one light source (2) is directed by way of an optical system (4, 14) with a defined chromatic aberration onto the surface of a sample (5) which is to be measured, wherein the light source (2) is tuned regarding the wavelengths to be emitted and the light reflected back from the sample surface (5) is directed onto at least one photosensor (7), wherein the sensor signal is measured over time and the time and intensity of a signal maximum are determined and evaluated, wherein the height Z of the surface is derived from the wavelength of the light source (2) at the time of the signal maximum,
wherein
the time-variable signal of the photosensor (7) is analysed electronically to determine the signal maximum by means of a detection system (8),
**characterised in that**
the detection system (8) comprises an extreme-value memory which follows the time-variable signal once a threshold value has been exceeded, in each case until an extremum of the signal is reached, wherein upon the extremum being reached in each case a peak indicator signal is generated, with its aid the time of the extremum and with its aid in turn the wavelength of the light source (2) associated with the signal maximum is ascertained, wherein in order to detect more than one extreme value in the time-variable signal once the respective peak indicator signal has been generated, and once the threshold value has not been reached the tracking of the signal is deactivated and, once in the further course the signal again exceeds the threshold value, further tracking of the time-variable signal is activated, until the next extremum to be detected is reached and a further peak indicator signal is generated.

2. Method according to claim 1, **characterised in that** the light from the light source (2) is split into a plurality of sub-beams, wherein the sub-beams which are reflected back are detected in parallel by means of a multichannel photosensor.

3. Method according to claim 1, **characterised in that** a plurality of light sources (2) is used, wherein the individual beams of the light sources which are reflected back are detected in parallel by means of a multichannel photosensor (7).

4. Chromatic confocal sensor for carrying out the method according to one of claims 1 to 3, with at least one light source (2), the light of which is directed by way of an optical system (4, 14) with a defined chromatic aberration onto the surface of a sample (5) which is to be measured, wherein the light source (2) can be tuned regarding the wavelength to be emitted and the light reflected back from the sample surface (5) is directed onto at least one photosensor (7), wherein a detection system (8) is set up to measure the sensor signal over time and to determine the time of a signal maximum, wherein the detection system (8) is set up to derive the height Z of the surface (5) from the wavelength of the light source (2) at the time of the signal maximum,
**characterised in that**
the detection system (8) comprises an extreme-value memory which follows the time-variable signal once a threshold value has been exceeded, in each case until an extremum of the signal is reached, and is set up, upon the extremum being reached, in each case to generate a peak indicator signal and with its aid to ascertain the time of the extremum and with its aid in turn the wavelength of the light source (2) associated with the signal maximum, wherein the extreme-value memory is furthermore set up in order to detect more than one extreme value in the time-variable signal once the respective peak indicator signal has been generated, and once the threshold value has not been reached to deactivate the tracking of the signal and, once in the further course the signal again exceeds the threshold value, to activate further tracking of the time-variable signal, until the next extremum to be detected is reached, and to generate a further peak indicator signal.

5. Chromatic confocal sensor according to claim 4, **characterised in that** the photosensor (7) is a photodiode.

6. Chromatic confocal sensor according to claim 4 or 5, **characterised in that** the light from the light source (2) by means of a beam splitter is split into a plurality of sub-beams, wherein the sub-beams which are reflected back are detected in parallel by means of a multichannel photosensor (7).

7. Chromatic confocal sensor according to claim 4 or 5, **characterised in that** a plurality of light sources (2) is provided, wherein the individual beams of the light sources (2) which are reflected back are detected in parallel by means of a multichannel photosensor (7).

8. Chromatic confocal sensor according to one of claims 4 to 7, **characterised in that** the light from the light source (2) is directed via a beam splitter (3) onto the optical system (4, 14) with a defined chromatic aberration.

9. Chromatic confocal sensor according to claim 8, **characterised in that** the beam splitter (3) is a semi-transparent mirror.

10. Chromatic confocal sensor according to claim 8, **characterised in that** the beam splitter (3) is a beam splitter cube.

11. Chromatic confocal sensor according to one of claims 4 to 10, **characterised in that** the photosensor (7) is preceded by a confocal filter (6) and/or the light source (2) is succeeded by a confocal filter (6).

12. Chromatic confocal sensor according to one of claims 4 to 11, **characterised in that** the light source (2), the photosensor (7) and the optical system (14) are connected to each other by a fibre coupler (13) by way of optical fibres (11).

13. Chromatic confocal sensor according to one of claims 4 to 12, **characterised in that** the light source (2) is a laser.

## Revendications

1. Procédé de mesure optique de surfaces techniques à l'aide d'un capteur chromatique confocal, dans lequel de la lumière d'au moins une source de lumière (2) est dirigée sur la surface à mesurer d'un échantillon (5) par l'intermédiaire d'un système optique (4, 14) avec une aberration chromatique définie, dans lequel la source de lumière (2) est ajustée par rapport aux longueurs d'onde à envoyer et la lumière réfléchie par la surface d'échantillon (5) est guidée sur au moins un capteur photoélectrique (7), dans lequel le signal de capteur est mesuré sur le temps et le moment et l'intensité d'une valeur maximale de signal sont définis et évalués, dans lequel la hauteur Z de la surface est déduite de la longueur d'onde de la source de lumière (2) au moment de la valeur maximale de signal,
dans lequel
le signal variable dans le temps du capteur photoélectrique (7) est analysé de manière électronique au moyen d'un système de détection (8) pour définir la valeur maximale de signal,
**caractérisé en ce que**
le système de détection (8) présente une mémoire de valeurs extrêmes, qui suit le signal variable dans le temps après le dépassement d'une valeur de seuil respectivement jusqu'à atteindre une valeur extrême du signal, dans lequel une fois la valeur extrême atteinte, un signal indicateur de pic est respectivement généré, à l'aide duquel le moment de la valeur extrême est relevé et à l'aide duquel à nouveau la longueur d'onde, associée à la valeur maximale de signal, de la source de lumière (2), est relevée, dans lequel le suivi du signal est désactivé après la génération du signal indicateur de pic respectif et après le non-dépassement de la valeur de seuil pour détecter plus d'une valeur extrême dans le signal variable dans le temps et un suivi ultérieur du signal variable dans le temps est activé après que par la suite le signal dépasse une nouvelle fois la valeur de seuil jusqu'à ce que la prochaine valeur extrême à détecter soit atteinte et qu'un autre signal indicateur de pic soit généré.

2. Procédé selon la revendication 1, **caractérisé en ce que** la lumière de la source de lumière (2) est scindée en une pluralité de faisceaux partiels, dans lequel les faisceaux partiels réfléchis sont détectés en parallèle au moyen d'un capteur photoélectrique à canaux multiples.

3. Procédé selon la revendication 1, **caractérisé en ce qu'**une pluralité de sources de lumière (2) est utilisée, dans lequel les faisceaux individuels réfléchis des sources de lumière sont détectés en parallèle au moyen d'un capteur photoélectrique (7) à canaux multiples.

4. Capteur chromatique confocal pour mettre en oeuvre le procédé selon l'une quelconque des revendications 1 à 3, avec au moins une source de lumière (2), dont la lumière est dirigée sur la surface à mesurer d'un échantillon (5) par l'intermédiaire d'un système optique (4, 14) avec une aberration chromatique définie, dans lequel la source de lumière (2) peut être ajustée par rapport à la longueur d'onde à émettre et la lumière réfléchie par la surface d'échantillon (5) est guidée sur au moins un capteur photoélectrique (7), dans lequel un système de détection (8) est mis au point pour mesurer le signal de capteur sur le temps et pour définir le moment d'une valeur maximale de signal, dans lequel le système de détection (8) est mis au point pour déduire de la longueur d'onde de la source de lumière (2) au moment de la valeur maximale de signal la hauteur Z de la surface (5),
**caractérisé en ce**
**que** le système de détection (8) présente une mémoire de valeurs extrêmes, qui suit le signal variable dans le temps après le dépassement d'une valeur de seuil respectivement jusqu'à atteindre une valeur extrême du signal, et est mis au moins pour générer une fois la valeur extrême atteinte respectivement un signal indicateur de pic et pour relever à l'aide de celui-ci le moment de la valeur extrême et à l'aide de celui-ci à nouveau la longueur d'onde, associée à la valeur maximale de signal, de la source de lumière (2), dans lequel la mémoire de valeurs extrêmes est par ailleurs mise au point pour désactiver le suivi du signal après la génération du signal indicateur de pic respectif et après le non-dépassement de la valeur de seuil pour détecter plus d'une valeur extrême dans le signal variable dans le temps et pour activer un suivi ultérieur du signal variable dans le temps après que par la suite le signal dépasse une nouvelle fois la valeur de seuil jusqu'à ce la prochaine valeur extrême à détecter soit atteinte, et pour générer un autre signal indicateur de pic.

5. Capteur chromatique confocal selon la revendication 4, **caractérisé en ce que** le capteur photoélectrique (7) est une diode photoélectrique.

6. Capteur chromatique confocal selon la revendication 4 ou 5, **caractérisé en ce que** la lumière de la source de lumière (2) est scindée en une pluralité de faisceaux partiels au moyen d'un diviseur de faisceaux, dans lequel les faisceaux partiels réfléchis sont détectés en parallèle au moyen d'un capteur photoélectrique (7) à canaux multiples.

7. Capteur chromatique confocal selon la revendication 4 ou 5, **caractérisé en ce qu'**une pluralité de sources de lumière (2) est prévue, dans lequel les faisceaux individuels réfléchis des sources de lumière (2) sont détectés en parallèle au moyen d'un capteur photoélectrique (7) à canaux multiples.

8. Capteur chromatique confocal selon l'une quelconque des revendications 4 à 7, **caractérisé en ce que** la lumière de la source de lumière (2) est dirigée sur le système optique (4, 14) avec une aberration chromatique définie par l'intermédiaire d'un diviseur de faisceaux (3).

9. Capteur chromatique confocal selon la revendication 8, **caractérisé en ce que** le diviseur de faisceaux (3) est un miroir semi-transparent.

10. Capteur chromatique confocal selon la revendication 8, **caractérisé en ce que** le diviseur de faisceaux (3) est un prisme diviseur de faisceaux.

11. Capteur chromatique confocal selon l'une quelconque des revendications 4 à 10, **caractérisé en ce qu'**un filtre confocal (6) est branché en amont du capteur photoélectrique (7) et/ou un filtre confocal (6) est branché en aval de la source de lumière (2).

12. Capteur chromatique confocal selon l'une quelconque des revendications 4 à 11, **caractérisé en ce que** la source de lumière (2), le capteur photoélectrique (7) et le système optique (14) sont rattachés les uns aux autres par l'intermédiaire de fibres optiques (11) par un coupleur à fibres (13).

13. Capteur chromatique confocal selon l'une quelconque des revendications 4 à 12, **caractérisé en ce que** la source de lumière (2) est un laser.
